# EUROPEAN PATENT APPLICATION

(11) **EP 4 135 381 A1**
(43) Date of publication of application: **15.02.2023**
(21) Application number: 22187360.7
(22) Date of filing: 28.07.2022
(51) Int. Cl.: H04W 12/06

(54) **DATA TRANSMISSION MANAGEMENT FOR USER EQUIPMENT IN COMMUNICATION NETWORK**

(30) Priority: 09.08.2021 IN 202141035928
(71) Applicant: Nokia Technologies Oy, 02610 Espoo (FI)
(72) Inventor: THIEBAUT, Laurent, Antony (FR); GUPTA, Pallab, Bangalore (IN)
(74) Representative: Roberts, David

(57) **Abstract**

Techniques are disclosed for managing uplink data transmission associated with user equipment during authentication/authorization of the user equipment when establishing a data network connection through a communication network.

## Description

### Field

The field relates generally to communication systems, and more particularly, but not exclusively, to security management within such systems.

### Background

This section introduces aspects that may be helpful in facilitating a better understanding of the inventions. Accordingly, the statements of this section are to be read in this light and are not to be understood as admissions about what is in the prior art or what is not in the prior art.

Fourth generation (4G) wireless mobile telecommunications technology, also known as Long Term Evolution (LTE) technology, was designed to provide high capacity mobile multimedia with high data rates particularly for human interaction. Such 4G networks typically employ an Evolved Packet System (EPS), the architecture of which comprises two sub-systems, i.e., an Evolved Universal Terrestrial Radio Access Network (E-UTRAN) and an Evolved Packet Core (EPC) network.

Next generation or fifth generation (5G) technology is intended to be used not only for human interaction, but also for machine type communications in so-called Internet of Things (IoT) networks. While 5G networks are intended to enable massive IoT services (e.g., very large numbers of limited capacity devices) and mission-critical IoT services (e.g., requiring high reliability), improvements over legacy mobile communication services are supported in the form of enhanced mobile broadband (eMBB) services providing improved wireless Internet access for mobile devices.

In an example communication system, user equipment (5G UE in a 5G network or, more broadly, a UE) communicates over an air interface with a base station or access point of an access network referred to as a NG-RAN in a 5G network. The access point (e.g., gNB) is illustratively part of the NG-RAN of the communication system. In general, the access point (e.g., gNB) provides access for the UE to a core network (CN or 5GC), which then provides access for the UE to other UEs and/or a data network such as a packet data network or PDN (e.g., Internet).

While UEs may be generally referred to as mobile stations, subscriber stations or, even more generally, communication devices, including examples such as a combination of a card inserted in a laptop or other equipment such as a smart phone, in some application scenarios, the UE is part of (e.g., card inserted in) an Unmanned/Uncrewed Aerial System (UAS) (also referred to as an Unmanned/Uncrewed Aerial Vehicle or UAV).

However, due to continuing attempts to improve the security of architectures and protocols associated with a 4G/5G networks, issues associated with UE authentication/authorization during establishment of a data network connection can present a significant challenge.

### Summary

Illustrative embodiments provide techniques for managing uplink data transmission associated with user equipment during authentication/authorization of the user equipment when establishing a data network connection through a communication network.

In one illustrative embodiment from a perspective of user equipment, a method comprises the following steps. The user equipment causes initiation of establishment of a connection with a data network through a communication network. A first notification is received by the user equipment from the communication network that uplink data transfer to the data network is not allowed. A second notification is received by the user equipment from the communication network that uplink data transfer to the data network is allowed, wherein the second notification corresponds to successful verification of the user equipment by an authenticating entity.

For example, the user equipment refrains from initiating an uplink data transfer to the data network between receipt of the first notification and receipt of the second notification. Also, by way of example, the verification comprises authentication and authorization of the user equipment done on a data network identifier (e.g., service level identity or data network-specific identity) that is different from an identifier (e.g., subscriber identity) used to access the communication network.

In another illustrative embodiment from a perspective of a communication network, a method comprises the following steps. The communication network receives a request from user equipment to establish a connection with a data network through the communication network. The communication network sends a first notification to the user equipment that uplink data transfer to the data network is not allowed. The communication network sends a second notification to the user equipment that uplink data transfer to the data network is allowed, wherein the second notification corresponds to successful verification of the user equipment by an authenticating entity. Again, by way of example, the verification comprises authentication and authorization of the user equipment done on a data network identifier (e.g., service level identity or data network-specific identity) that is different from an identifier (e.g., subscriber identity) used to access the communication network.

Further illustrative embodiments are provided in the form of a non-transitory computer-readable storage medium having embodied therein executable program code that when executed by a processor causes the processor to perform the above steps. Still further illustrative embodiments comprise apparatus with a processor and a memory configured to perform the above steps.

Advantageously, illustrative embodiments provide enhancements to the authentication and authorization of a UAS during packet data network (PDN) connection establishment of the UE used with the UAS. However, it is to be appreciated that illustrative embodiments more generally extend these enhancements, for example, to any UEs (i.e., not necessarily those used with UASs) for authentication and authorization (i.e., verification) of a data network-specific identity presented by the UE by an authenticating entity during data network connection establishment. For example, in the UAS scenario, the authenticating entity may be a UAS Service Supplier (USS), and in an EPS scenario, the authenticating entity may be a Data Network Authentication, Authorization and Accounting server (DN-AAA server). Embodiments, however, are not limited to these exemplary scenarios.

These and other features and advantages of embodiments described herein will become more apparent from the accompanying drawings and the following detailed description.

### Brief Description of the Drawings

FIG. 1A illustrates a communication system implementing a first communication network architecture with which one or more illustrative embodiments may be implemented.
FIG. 1B illustrates a communication system implementing a second communication network architecture with which one or more illustrative embodiments may be implemented.
FIG. 2 illustrates user equipment and at least one network entity/function with which one or more illustrative embodiments may be implemented.
FIG. 3 illustrates a composite architecture of a first type of communication network and a second type of communication network with which one or more illustrative embodiments may be implemented.
FIG. 4 illustrates further details of the composite architecture of FIG. 3.
FIG. 5 illustrates an authentication/authorization message flow associated with an unmanned/uncrewed aerial system performed during data network connection establishment according to an illustrative embodiment.

### Detailed Description

Embodiments will be illustrated herein in conjunction with example communication systems and associated techniques for security management in communication systems. It should be understood, however, that the scope of the claims is not limited to particular types of communication systems and/or processes disclosed. Embodiments can be implemented in a wide variety of other types of communication systems, using alternative networks, processes and operations. For example, although illustrated in the context of wireless cellular-based systems utilizing 3GPP system elements such as a 4G and/or 5G system, the disclosed embodiments can be adapted in a straightforward manner to a variety of other types of communication systems.

In accordance with illustrative embodiments, one or more 3GPP technical specifications (TS) and/or technical reports (TR) may provide further explanation of network entities and/or operations that may interact with parts of the inventive solutions. For example, details of E-UTRAN access in the EPS architecture are described in TS 23.401, entitled "General Packet Radio Service (GPRS) Enhancements for Evolved Universal Terrestrial Radio Access Network (E-UTRAN) Access," the disclosure of which is incorporated by reference herein in its entirety. In a 5G network, the access network is described in TS 23.501, entitled "Technical Specification Group Services and System Aspects; System Architecture for the 5G System," the disclosure of which is incorporated by reference herein in its entirety. The 5G core network is described in TS 23.502, entitled "Technical Specification Group Services and System Aspects; Procedures for the 5G System (5GS)," the disclosure of which is incorporated by reference herein in its entirety. Other 3GPP TS/TR documents may provide other details that one of ordinary skill in the art will realize. For example, in the contest of UAS applications, TS 23.256, entitled "Support of Uncrewed Aerial Systems (UAS) Connectivity, Identification and Tracking; Stage 2," and TS 22.125, entitled "Unmanned Aerial System (UAS) Support in 3GPP; Stage 1," the disclosures of which are incorporated by reference herein in their entireties, may be applicable to illustrative embodiments as will be further explained herein.

However, while well-suited for 4G-related and/or 5G-related 3GPP standards, embodiments are not necessarily intended to be limited to any particular standards but rather provide for a common solution across multiple standards and architectures.

Furthermore, as illustratively used herein, various abbreviations will be referenced including, but not limited to, the following:
3GPP: 3^{rd} Generation Partnership Project
AAA: Authentication Authorization and Accounting
DN: Data Network
MME: Mobility Management Entity
NAS: Non Access Stratum
NEF: Network Exposure Function
PDN: Packet Data Network
PCO: Protocol Configuration Option
PGW: PDN Gateway
SGW: Serving Gateway
SMF: Session Management Function
TPAE: Third Party Authorized Entity
UAS: Unmanned/Uncrewed Aerial System
UAV: Unmanned/Uncrewed Aerial Vehicle
USS: UAS Service Supplier
UTM: UAS Traffic Management
UUAA: USS UAV Authorization/Authentication

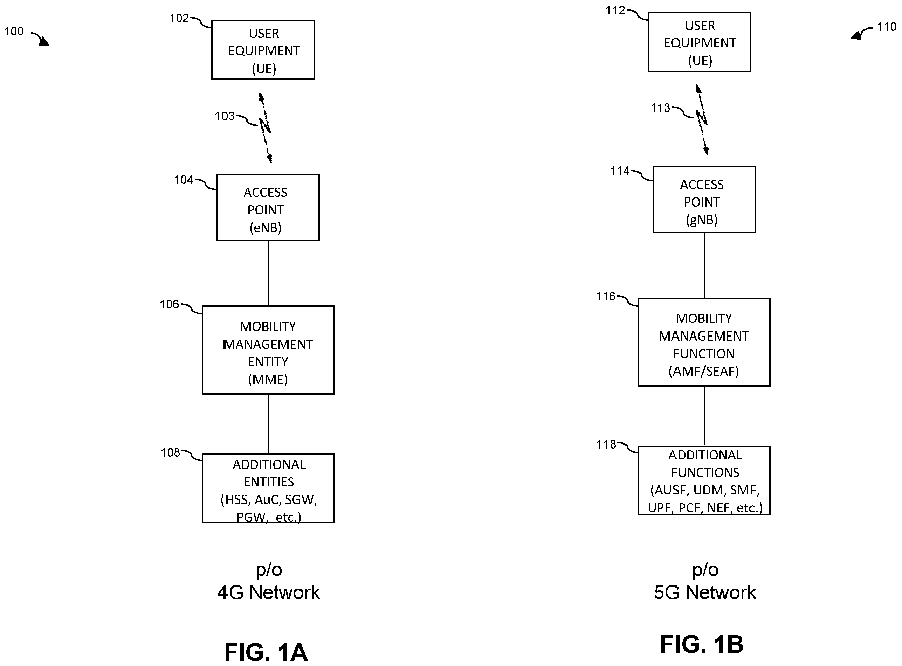

Illustrative embodiments are related to UAS authentication/authorization in 4G and 5G networks. Prior to describing such illustrative embodiments, a general description of certain main components of a 4G network (FIG. 1A) and a 5G network (FIG. 1B) will be described below.

FIG. 1A shows part of a 4G communication system 100 within which illustrative embodiments are implemented. It is to be understood that the elements shown in communication system 100 are intended to represent certain main entities provided within the system, e.g., UE access entities, mobility management entities, authentication entities, etc. As such, the blocks shown in FIG. 1A reference specific elements in 4G networks that provide these main entities. However, other network elements may be used to implement some or all of the main entities represented. Also, it is to be understood that not all entities of a 4G network are depicted in FIG. 1A. Rather, at least some entities that facilitate an explanation of illustrative embodiments are represented. Subsequent figures may further depict these entities and additional entities (i.e., which may be more generally referred to as network nodes).

Accordingly, as shown, communication system 100 comprises user equipment (UE) 102 that communicates via an air interface 103 with an access point (eNB) 104. As mentioned, in illustrative embodiments, UE 102 may be part of (e.g., card inserted in) a UAS. The term "aerial-capable user equipment" may be used herein to encompass a variety of different types of UASs (and UAVs) with UEs that are airborne such as, but not limited to, drones.

The access point 104 is illustratively part of an access network of the communication system 100. Such an access network may comprise, for example, a 4G RAN (E-UTRAN) system having a plurality of base stations and one or more associated radio network control functions. The base stations and radio network control functions may be logically separate entities, but in a given embodiment may be implemented in the same physical network element.

The access point 104 in this illustrative embodiment is operatively coupled to mobility management entity (MME) 106. A mobility management entity in the core network part of the communication system manages or otherwise participates in, among other network operations, access and mobility (including authentication/authorization) operations with the UE (through the access point 104). The MME may also be referred to herein, more generally, as an access and mobility management node.

The MME 106 in this illustrative embodiment is operatively coupled to additional network entities 108. As shown, some of these entities include a home subscriber server (HSS), as well as an authentication center (AuC). The HSS and AuC (separately or collectively) may also be referred to herein, more generally, as an authentication node or authentication nodes. Also, additional entities 108 may include a serving gateway (SGW) and a packet data network gateway (PGW).

Note that a UE, such as UE 102, is typically subscribed to what is referred to as a Home Public Land Mobile Network (HPLMN) in which some or all of the entities 106 and 108 reside. If the UE is roaming (not in the HPLMN), it is typically connected with a Visited Public Land Mobile Network (VPLMN) also referred to as a visited network, while the network that is currently serving the UE is referred to as a serving network. In the roaming case, some of the network entities 106 and 108 can reside in the VPLMN, in which case, entities in the VPLMN communicate with entities in the HPLMN as needed. However, in a non-roaming scenario, mobility management entity 106 and the other network entities 108 reside in the same communication network, i.e. HPLMN Embodiments described herein are not limited by which entities reside in which PLMN (i.e., HPLMN or VPLMN).

Further typical operations and entities of a 4G network are not described here since they are not the focus of the illustrative embodiments and may be found in appropriate 3GPP 4G documentation.

It is to be appreciated that this particular arrangement of system elements is an example only, and other types and arrangements of additional or alternative elements can be used to implement a communication system in other embodiments. For example, in other embodiments, the system 100 may comprise other entities not expressly shown herein.

Accordingly, the FIG. 1A arrangement is just one example configuration of a wireless cellular system, and numerous alternative configurations of system elements may be used. For example, although only single entities may be shown in the FIG. 1A embodiment, this is for simplicity and clarity of description only. A given alternative embodiment may of course include larger numbers of such system elements, as well as additional or alternative elements of a type commonly associated with conventional system implementations.

FIG. 1B shows part of a 5G communication system 110 within which illustrative embodiments are implemented. It is to be understood that the elements shown in communication system 110 are intended to represent certain main functions provided within the system, e.g., UE access functions, mobility management functions, authentication functions, etc. As such, the blocks shown in FIG. 1B reference specific elements in 5G networks that provide these main functions. However, other network elements may be used to implement some or all of the certain main functions represented. Also, it is to be understood that not all functions of a 5G network are depicted in FIG. 1B. Rather, at least some functions that facilitate an explanation of illustrative embodiments are represented. Subsequent figures may further depict these functions and additional functions (i.e., more generally referred to as network nodes).

Accordingly, as shown, communication system 110 comprises user equipment (UE) 112 that communicates via an air interface 113 with an access point (gNB) 114. Again, UE 112 comprises a UAS in illustrative embodiments.

The access point 114 is illustratively part of an access network of the communication system 110. Such an access network may comprise, for example, a NG-RAN system having a plurality of base stations and one or more associated radio network control functions. The base stations and radio network control functions may be logically separate entities, but in a given embodiment may be implemented in the same physical network element.

The access point 114 in this illustrative embodiment is operatively coupled to mobility management functions 116. In a 5G network, the mobility management function is implemented by an Access and Mobility Management Function (AMF). A Security Anchor Function (SEAF) can also be implemented with the AMF connecting a UE with the mobility management function. A mobility management function, as used herein, is the element or function (i.e., entity) in the core network (CN) part of the communication system that manages or otherwise participates in, among other network operations, access and mobility (including authentication/authorization) operations with the UE (through the access point 114). The AMF may also be referred to herein, more generally, as an access and mobility management node.

The AMF 116 in this illustrative embodiment is operatively coupled to additional functions 118. As shown, some of these functions include the Unified Data Management (UDM) function, as well as an Authentication Server Function (AUSF). The AUSF and UDM (separately or collectively) may also be referred to herein, more generally, as an authentication node or authentication nodes. Additional functions 118 may also include a Session Management Function (SMF), a User Plane Function (UPF), a Policy Control Function (PCF) and Network Exposure Function (NEF).

Note that a UE, such as UE 112, is typically subscribed to what is referred to as a Home Public Land Mobile Network (HPLMN) in which some or all of the functions 106 and 108 reside. If the UE is roaming (not in the HPLMN), it is typically connected with a Visited Public Land Mobile Network (VPLMN) also referred to as a visited network, while the network that is currently serving the UE is referred to as a serving network. In the roaming case, some of the network functions 116 and 118 can reside in the VPLMN, in which case, functions in the VPLMN communicate with functions in the HPLMN as needed. However, in a non-roaming scenario, mobility management functions 116 and the other network functions 118 reside in the same communication network, i.e. HPLMN. Embodiments described herein are not limited by which functions reside in which PLMN (i.e., HPLMN or VPLMN).

Further typical operations and functions of such a network are not described here since they are not the focus of the illustrative embodiments and may be found in appropriate 3GPP 5G documentation. Note that functions shown in 116 and 118 are examples of network functions (NFs).

It is to be appreciated that this particular arrangement of system elements is an example only, and other types and arrangements of additional or alternative elements can be used to implement a communication system in other embodiments. For example, in other embodiments, the system 100 may comprise other elements/functions not expressly shown herein.

Accordingly, the FIG. 1B arrangement is just one example configuration of a wireless cellular system, and numerous alternative configurations of system elements may be used. For example, although only single functions are shown in the FIG. 1B embodiment, this is for simplicity and clarity of description only. A given alternative embodiment may of course include larger numbers of such system elements, as well as additional or alternative elements of a type commonly associated with conventional system implementations.

It is also to be noted that while FIG. 1B illustrates system elements as singular functional blocks, the various subnetworks that make up the 5G network are partitioned into so-called network slices. Network slices (network partitions) comprise a series of network function (NF) sets (i.e., function chains) for each corresponding service type using network function virtualization (NFV) on a common physical infrastructure. The network slices are instantiated as needed for a given service, e.g., eMBB service, massive IoT service, and mission-critical IoT service. A network slice or function is thus instantiated when an instance of that network slice or function is created. In some embodiments, this involves installing or otherwise running the network slice or function on one or more host devices of the underlying physical infrastructure. UE 112 is configured to access one or more of these services via gNB 114.

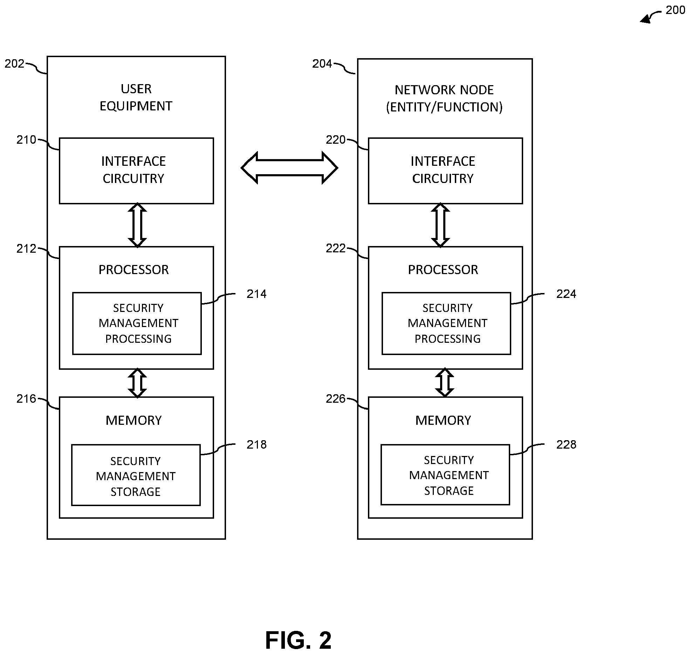

FIG. 2 is a block diagram of user equipment (UE) and a network node for providing, or otherwise participating in, authentication/authorization in a communication system in an illustrative embodiment. System 200 is shown comprising user equipment 202 and a network node 204.

It is to be appreciated that user equipment 202 represents one example of UE 102 (FIG. 1A) or UE 112 (FIG. 1B), which comprises a UAS in illustrative embodiments. It is to be further appreciated that the network node 204 represents any network entities and/or any network functions, as well as any other network components, elements, services, etc., that are configured to provide security management and other techniques described herein, for example, but not limited to, AMF, SEAF and UDM such as are part of an SBA-based 5G core network (FIG. 1B), or MME, HSS and AuC such as are a part of an EPS-based 4G core network (FIG. 1A).

Network node 204 can also be a network entity, function, node, component, element, service, etc., external to the core network, i.e., a third-party external enterprise network. Further, network node 204 can represent one or more processing devices configured to orchestrate and manage instantiation of one or more network entities or functions within a core network or any communication network or system. Network node 204 can be any other entity/function that is involved, directly or indirectly, in the authentication/authorization of a UAS, for example, as may be described in the above-referenced TS 23.256 and TS 22.125 and/or as may otherwise be described below. By way of example, in the case of secondary DN authentication/authorization by a DN-AAA, network node 204 can be a DN-AAA server.

User equipment 202 comprises a processor 212 coupled to a memory 216 and interface circuitry 210. The processor 212 of user equipment 202 includes a security management processing module 214 that may be implemented at least in part in the form of software executed by the processor. The processing module 214 performs operations associated with security management as described in conjunction with subsequent figures and otherwise herein. The memory 216 of user equipment 202 includes a security management storage module 218 that stores data generated or otherwise used during security management operations.

The network node 204 comprises a processor 222 coupled to a memory 226 and interface circuitry 220. The processor 222 of the network node 204 includes a security management processing module 224 that may be implemented at least in part in the form of software executed by the processor 222. The processing module 224 performs operations associated with security management as described in conjunction with subsequent figures and otherwise herein. The memory 226 of the network node 204 includes a security management storage module 228 that stores data generated or otherwise used during security management operations.

The processors 212 and 222 may comprise, for example, microprocessors, application-specific integrated circuits (ASICs), field programmable gate arrays (FPGAs), digital signal processors (DSPs) or other types of processing devices or integrated circuits, as well as portions or combinations of such elements. Such integrated circuit devices, as well as portions or combinations thereof, are examples of "circuitry" as that term is used herein. A wide variety of other arrangements of hardware and associated software or firmware may be used in implementing the illustrative embodiments. In addition, illustrative embodiments may be realized in a completely virtualized environment using software, running on a cloud platform, to emulate the various network functions.

The memories 216 and 226 may be used to store one or more software programs that are executed by the respective processors 212 and 222 to implement at least a portion of the functionality described herein. For example, security management operations and other functionality as described in conjunction with subsequent figures and otherwise herein may be implemented in a straightforward manner using software code executed by processors 212 and 222.

A given one of the memories 216 or 226 may therefore be viewed as an example of what is more generally referred to herein as a computer program product or still more generally as a processor-readable storage medium that has executable program code embodied therein. Other examples of processor-readable storage media may include disks or other types of magnetic or optical media, in any combination. Illustrative embodiments can include articles of manufacture comprising such computer program products or other processor-readable storage media.

The memory 216 or 226 may more particularly comprise, for example, an electronic random-access memory (RAM) such as static RAM (SRAM), dynamic RAM (DRAM) or other types of volatile or non-volatile electronic memory. The latter may include, for example, non-volatile memories such as flash memory, magnetic RAM (MRAM), phase-change RAM (PC-RAM) or ferroelectric RAM (FRAM). The term "memory" as used herein is intended to be broadly construed, and may additionally or alternatively encompass, for example, a read-only memory (ROM), a disk-based memory, or other type of storage device, as well as portions or combinations of such devices.

The interface circuitries 210 and 220 illustratively comprise transceivers or other communication hardware or firmware that allows the associated system elements to communicate with one another in the manner described herein.

It is apparent from FIG. 2 that user equipment 202 is configured for communication with network node 204 and vice-versa via their respective interface circuitries 210 and 220. This communication involves user equipment 202 sending data to the network node 204, and the network node 204 sending data to the user equipment 202. However, in alternative embodiments, other network nodes may be operatively coupled between user equipment 202 and network node 204. The term "data" as used herein is intended to be construed broadly, so as to encompass any type of information that may be sent between user equipment and a network node, as well as between network entities, including, but not limited to, messages, identifiers, keys, indicators, user data, control data, etc.

It is to be appreciated that the particular arrangement of components shown in FIG. 2 is an example only, and numerous alternative configurations may be used in other embodiments. For example, any given network node can be configured to incorporate additional or alternative components and to support other communication protocols.

Other system elements such as eNB 104 and gNB 114 may each also be configured to include components such as a processor, memory and network interface. These elements need not be implemented on separate stand-alone processing platforms, but could instead, for example, represent different functional portions of a single common processing platform.

Still further, while FIG. 2 illustrates example architectures and interconnectivity between user equipment and a network node, FIG. 2 can also represent example architectures and interconnectivity between multiple network nodes (e.g., 202 can represent one network node operatively coupled to another network node in the form of network node 204). More generally, FIG. 2 can be considered to represent two processing devices configured to provide respective security management functionalities and operatively coupled to one another in a communication system.

As mentioned above, TS 23.256 specifies architecture enhancements to 4G/5G networks for supporting UAS connectivity, identification, and tracking, according to use cases and service requirements defined in TS 22.125.

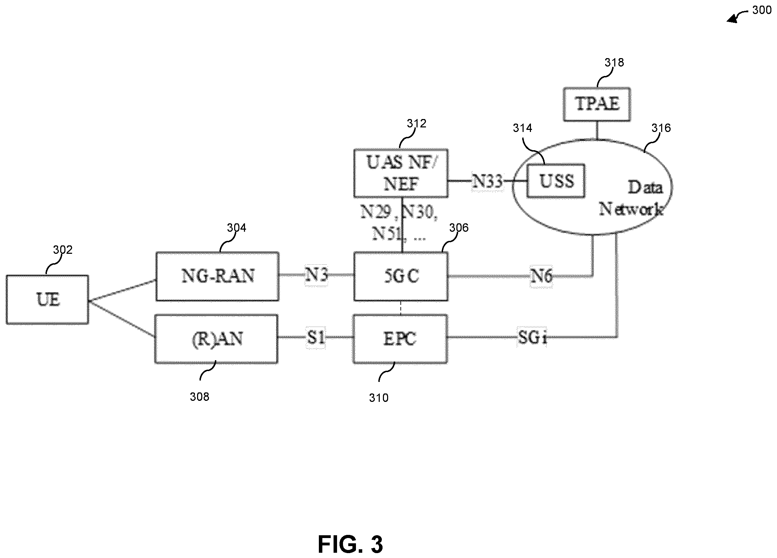

FIG. 3 illustrates a composite architecture 300 of 4G and 5G communication networks for UAS applications described in TS 23.256, with which one or more illustrative embodiments may be implemented. As generally shown, a UE (in a UAS) 302 may operatively couple to composite architecture 300 via NG-RAN 304 (5G access network) so as to access 5GC 306 (5G core network). Likewise, UE (in a UAS) 302 may operatively couple to composite architecture 300 via RAN 308 such as E-UTRAN (4G access network) so as to access EPC 310 (4G core network). A UAS NF/NEF 312 is operatively coupled to or otherwise incorporated as part of 5GC 306 and/or EPC 310. UAS NF/NEF is operatively coupled to a USS 314 to access Data Network 316 (e.g. a PDN). TPAE 318 is operatively coupled to Data Network 316. Note that the N, S and SG references in FIG. 3 correspond to the specific 3GPP interfaces used to connect network nodes.

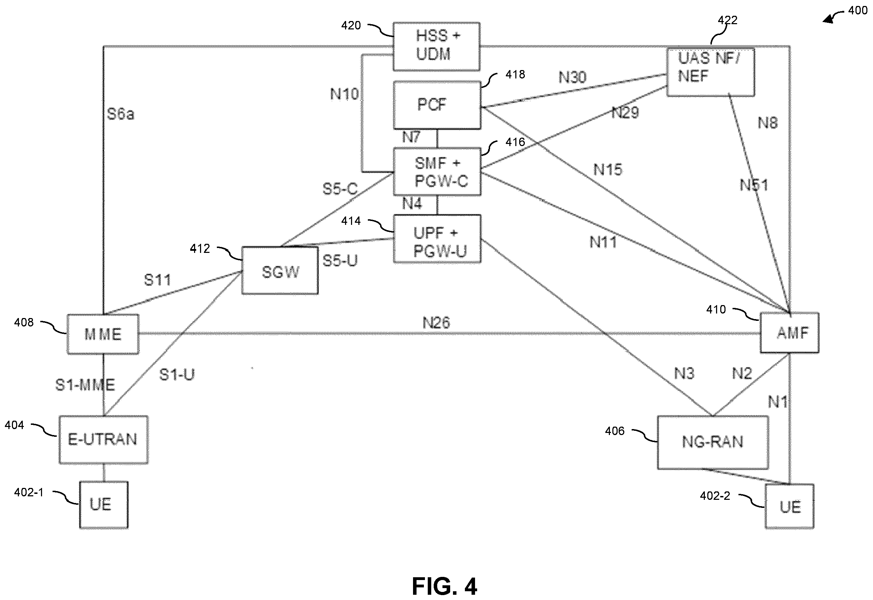

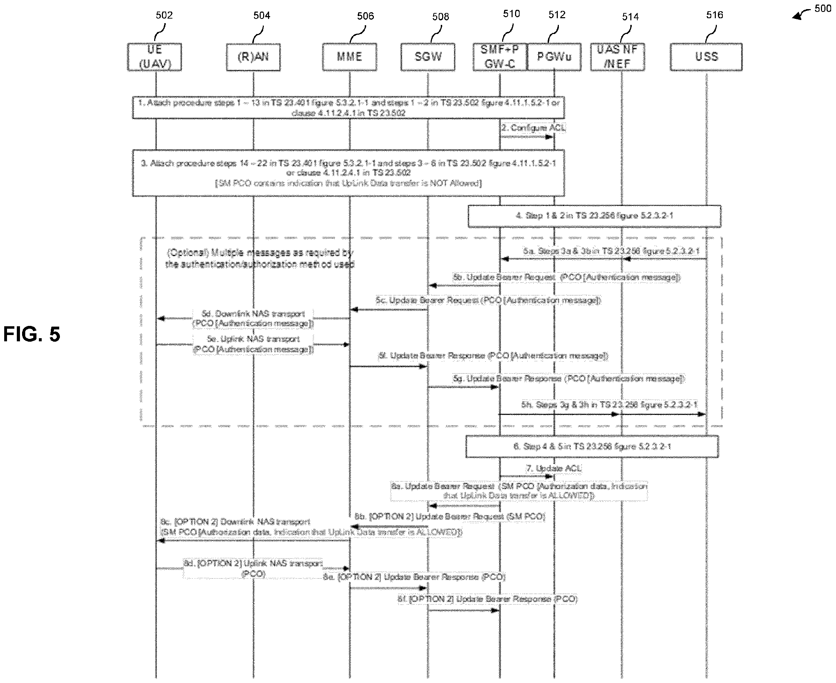

FIG. 4 illustrates a composite architecture 400 which depicts further details of the composite architecture 300 of FIG. 3. As shown, UE 402-1 and UE 402-2, which can be the same or different UEs, connect to composite architecture 400 via E-UTRAN 404 and NG-RAN 406, respectively. Composite architecture 400 comprises 4G access and mobility controller MME 408, 5G access and mobility controller AMF 410, SGW 412, user plane controller 414 (PGW-U for 4G and UPF for 5G), control plane controller 416 (PGW-C for 4G and SMF for 5G), PCF 418, authentication controller 420 (HSS for 4G and UDM for 5G) and UAS NF/NEF 422. Note that the UAS Network Function (UAS NF) is supported by the NEF and used for external exposure of services to the USS (i.e., USS 314 in FIG. 3). These and other network nodes will be further described below in the context of FIG. 5.

As per TS 23.256, at the aviation level, a UAS is identified by a Civil Aviation Authority (CAA) Level UAV identity (ID). In addition to the normal/primary UE authentication/authorization, the 3GPP system may also perform authentication/authorization of the UAV identity (CAA-Level UAV ID) by the UAS Service Supplier (USS)/UAS Traffic Management (UTM), before allowing any services to the aerial UE in the network. For 5GS, the authentication/authorization of the CAA-Level UAV ID may be performed at 5GS Registration or during Packet Data Unit (PDU) session establishment. For EPS, the UAV authentication/authorization is performed during PDN connection establishment.

Furthermore, TS 23.256 defines the USS UAV Authorization/Authentication (UUAA) during default PDN connection at the time of EPS Attach. 3GPP Rel-17 also defines a Secondary DN authentication/authorization in TS 23.501.

The authentication/authorization procedure during each of USS UAV Authorization/Authentication (UUAA) and secondary DN authentication/authorization may require multiple round trips of authentication related message exchanges between the UE and the authenticating entity (USS/UTM or DN AAA server). Over EPC, when the UE requests the establishment of a PDN connection, 4G NAS and S11/S5/S8 signaling do not anticipate exchange between the UE and the PGW (PDN GW) of extra signaling beyond the UE request and the network answer that the PDN connection has been established (NAS default bearer activation).

As per the procedure defined in TS 23.256, after the default bearer activation and until getting a successful authentication response from the authenticating entity (USS/UTM in case of UAS or DN AAA server for secondary DN authentication/authorization), access control is applied on the PGW (PDN GW) to stop any traffic on the default bearer. However, it is realized herein that the UE is not aware that the PDN connection cannot be used for uplink data transfer. This condition leads to the UE attempting to perform uplink data transfer even though the uplink data cannot be transferred to the PDN as intended by the UE. As a result, network resources are wasted as well as processing capacity of the UE and the UE applications may wrongly assume they can start accessing the Data Network.

Illustrative embodiments provide solutions for overcoming the above and other challenges. When secondary DN authentication/authorization or SM level UUAA is to apply at the establishment of a PDN connection (i.e., over EPC), the network (PGW) notifies the UE that the PDN connection is established under the condition that secondary DN authentication/authorization or SM level UUAA succeeds. In accordance with illustrative embodiments, until the network (e.g., PGW) notifies the UE that the UE secondary DN authentication/authorization or SM level UUAA has succeeded, the UE shall not send uplink data to the network (or if it sends such data, they may be discarded by the network).

Note that in accordance with TS 23.256, UUAA-MM refers to the UUAA procedure optionally performed during registration to a 5GS, while UUAA-SM refers to the UUAA procedure optionally performed (when UUAA-MM is not performed) during the establishment of a PDU session, and performed during the establishment of a PDN connection.

FIG. 5 illustrates a message flow 500 for performing SM level UUAA performed at PDN connection establishment (i.e. for EPC). Although FIG. 5 illustrates only the SM level UUAA procedure, illustrative embodiments are equally applicable for secondary DN authentication/authorization by DN-AAA (e.g. using EAP/TLS for the UE to get authenticated and authorized by a AAA server on the data network). As shown, message flow 500 involves UE 502, RAN 504, MME 506, SGW 508, PGW represented as SMF+PGW-C 510 and PGW-U 512, UAS NF/NEF 514 and USS 516.

In general, UE 502 is first authenticated by the communication network (done by MME 506 for 4G networks) based on credentials of the communication network (e.g., using Universal Subscriber Identity Module (USIM)-based authentication). When this is completed, the communication network starts considering UE requests for connectivity to a data network (which may consider other credentials, related to the data network).

At step 1, UE 502 initiates EPS Attach procedure, e.g., as in steps 1-13 in TS 23.401 of figure 5.3.2.1-1 and steps 1-2 in TS 23.502 figure 4.11.1.5.2-1 or clause 4.11.2.4.1 in TS 23.502. UE 502 includes in the Attach Request, the Service Level Device Identity (e.g., the CAA-Level UAV ID in case of UAV), and may include Authentication Data as needed by the authenticating entity (i.e., the USS 516 in case of UAV or DN-AAA server in case of secondary DN authentication/authorization) in the Protocol Configuration Options (PCO).

At step 2, the PGW (SMF+PGW-C 510 in case of 5GC-EPC interworking) determines that the PDN connection request needs to be authenticated/authorized by an authenticating entity/server (i.e., USS 516 in case of UAV or DN-AAA server in case of secondary DN authentication/authorization) and configures an Access Control List (ACL) to stop any traffic over the default PDN Connection.

At step 3, Attach procedure is completed, e.g., as in steps 14-22 in TS 23.401 figure 5.3.2.1-1, before invoking SM level UUAA (i.e., UUAA-SM) procedure (or secondary DN authentication/authorization by DN-AAA). During the Attach procedure, when the PGW (SMF+PGW-C 510) returns a Create Session Response as in step 15 of figure 5.3.2.1-1 in TS 23.401, the PGW includes, in PCO (Protocol Configuration Options), an indication to UE 502 that UpLink Data transmission is NOT ALLOWED yet on the PDN connection. This is done to enable the possibility of multiple round trips of authentication related message exchanges between UE 502 and the authenticating entity/server (USS 516 or DN AAA server) authenticating UE 502, as MME 506 cannot exchange NAS SM transport with UE 502 before the network has sent Attach Accept. After the Attach complete (and default bearer activation), if UE 502 has received an "UpLink Data transmission is NOT ALLOWED" indication (i.e., first notification), the UE does not send (i.e., refrains from sending) UpLink data to the network, until it receives an indication further from the network that "UpLink Data transmission is ALLOWED" on the PDN connection (i.e., a second notification).

At step 4, the PGW (SMF+PGW-C 510) initiates the authentication/authorization procedure. In message flow 500 (i.e., for UUAA-SM), it follows the authentication/authorization procedure as described in steps 1-2 of figure 5.2.3.2-1 in 3GPP TS 23.256. For secondary DN authentication, the PGW follows steps 2 and 3 of TS 23.502 figure 4.3.2.3-1 for PDU Session Establishment authentication/authorization by a DN-AAA.

At step 5, there may be multiple round-trip messages as required by the authentication method used by the authenticating entity/server (e.g., USS 516 or DN-AAA). The PCO including the authentication message from the authenticating entity/server (e.g. USS 516 or DN-AAA) is transferred to UE 502 by the PGW (SMF+PGW-C 510) in an Update Bearer Request and Downlink NAS Transport (steps 5b - 5d). The response from UE 502 is transferred to the PGW (SMF+PGW-C 510) in an Uplink NAS Transport and Update Bearer Response (steps 5e - 5g). Using PCO and Update Bearer procedures allows to minimize the impacts on MME 506 and to have no impacts on SGW 508.

At step 6, the authentication/authorization process is completed with the authenticating entity/server and a authentication/authorization result is received. In message flow 500 (i.e., for UUAA), it follows the authentication/authorization procedure as described in steps 4-5 of figure 5.2.3.2-1 in 3GPP TS 23.256.

After a successful UUAA-SM (or secondary DN authentication/authorization by DN-AAA), at step 7, the PGW (SMF+PGW-C 510) updates the ACL to allow traffic over the PDN Connection.

Further, at step 8, the PGW (or SMF+PGW-C 510) sends an Update Bearer Request, including in a PCO, an indication to UE 502 that UpLink Data transmission is now ALLOWED on the PDN connection. The PGW (SMF+PGW-C 510) may also include an Authentication/Authorization result and the Authorization Data that needs to be transferred to UE 502.

Advantageously, as illustrated herein, illustrative embodiments provide for the UE to be first authenticated by the communication network (done by the MME for 4G networks) based on credentials of the communication network (e.g., using USIM-based authentication). When this is completed the communication network starts considering UE requests for connectivity to a data network. As part of the handling of UE requests for connectivity to a data network, the communication network sends a first notification that uplink data transfer to the data network is not allowed, then authentication by the data network is done based on a data network identifier and then the communication network sends the second notification that uplink data transfer to the data network is allowed. For example, in the case of a UAS, the UE presents a CAA-Level ID, which may be referred to as service level device identity. For DN-AAA based secondary DN authentication/authorization, this identity may be referred to as a DN-specific identity.

A similar message flow for secondary DN authentication/authorization by DN-AAA can be realized in a straightforward manner given the inventive teachings herein. More particularly, the procedure for secondary authentication/authorization by a DN-AAA server during the establishment of a PDU Session in 5GS is described in TS 23.501 and TS 23.502. Support of secondary DN authentication and authorization in EPC (interworking) cases is also currently seen as a challenge/gap for 5GC-EPC interworking. As such, illustrative embodiments are intended to be implemented more generally in any UE (i.e., not necessarily UEs implemented in UASs).

The particular processing operations and other system functionality described in conjunction with the diagrams described herein are presented by way of illustrative example only, and should not be construed as limiting the scope of the disclosure in any way. Alternative embodiments can use other types of processing operations and messaging protocols. For example, the ordering of the steps may be varied in other embodiments, or certain steps may be performed at least in part concurrently with one another rather than serially. Also, one or more of the steps may be repeated periodically, or multiple instances of the methods can be performed in parallel with one another.

It should again be emphasized that the various embodiments described herein are presented by way of illustrative example only and should not be construed as limiting the scope of the claims. For example, alternative embodiments can utilize different communication system configurations, user equipment configurations, base station configurations, provisioning and usage processes, messaging protocols and message formats than those described above in the context of the illustrative embodiments. These and numerous other alternative embodiments within the scope of the appended claims will be readily apparent to those skilled in the art.

## Claims

1. An apparatus comprising means for:
causing initiation of establishment of a connection with a data network through a communication network;
receiving a first notification from the communication network that uplink data transfer to the data network is not allowed; and
receiving a second notification from the communication network that uplink data transfer to the data network is allowed, wherein the second notification corresponds to successful verification of the apparatus by an authenticating entity.

2. The apparatus of claim 1, wherein the apparatus refrains from initiating an uplink data transfer to the data network between receipt of the first notification and receipt of the second notification.

3. The apparatus of claim 1, wherein the apparatus is part of user equipment configured to access the data network through the communication network.

4. The apparatus of claim 3, wherein the user equipment is part of an uncrewed aerial system (UAS).

5. The apparatus of claim 1, wherein the verification comprises authentication and authorization of the apparatus done on a data network identifier that is different from an identifier used to access the communication network.

6. A method comprising:
causing, by user equipment, initiation of establishment of a connection with a data network through a communication network;
receiving, at the user equipment, a first notification from the communication network that uplink data transfer to the data network is not allowed; and
receiving, at the user equipment, a second notification from the communication network that uplink data transfer to the data network is allowed, wherein the second notification corresponds to successful verification of the user equipment by an authenticating entity.

7. The method of claim 6, wherein the user equipment refrains from initiating an uplink data transfer to the data network between receipt of the first notification and receipt of the second notification.

8. The method of claim 6, wherein the user equipment is part of an uncrewed aerial system (UAS).

9. The method of claim 6, wherein the verification comprises authentication and authorization of the apparatus done on a data network identifier that is different from an identifier used to access the communication network.

10. A method comprising:
receiving a request from user equipment to establish a connection with a data network through a communication network;
sending a first notification from the communication network to the user equipment that uplink data transfer to the data network is not allowed; and
sending a second notification from the communication network to the user equipment that uplink data transfer to the data network is allowed, wherein the second notification corresponds to successful verification of the user equipment by an authenticating entity.

11. The method of claim 10, wherein the verification comprises authentication and authorization of the user equipment done on a data network identifier that is different from an identifier used to access the communication network.

12. The method of claim 10, wherein the communication network comprises at least one of a 4G network architecture and a 5G network architecture.

13. The method of claim 10, wherein the authenticating entity comprises a Data Network - Authentication, Authorization and Accounting (DN-AAA) server.

14. The method of claim 10, wherein the authenticating entity comprises a UAS Service Supplier (USS) server.

15. The method of claim 10, wherein the first notification and the second notification are generated by a data network gateway of the communication network.
